# EUROPÄISCHE PATENTSCHRIFT

(11) **EP 2 323 473 B1**
(45) Veröffentlichungstag und Bekanntmachung des Hinweises auf die Patenterteilung: **17.04.2013**
(21) Anmeldenummer: 09778034.0
(22) Anmeldetag: 21.08.2009
(51) Int. Cl.: A01G 9/02

(54) **BEGRÜNUNGSMODUL, BESTÜCKUNGSMODUL SOWIE KASSETTENMODUL FÜR EINEN MODULAREN AUFBAU ZUR BEGRÜNUNG VON SENKRECHTEN ODER SCHRÄGEN WÄNDEN**
GREENING MODULE, EQUIPMENT MODULE, AND CASSETTE MODULE FOR A MODULAR CONSTRUCTION FOR GREENING VERTICAL OR SLANTED WALLS
MODULE DE VERDURE, MODULE DE GARNISSAGE ET MODULE CASSETTE POUR UNE CONSTRUCTION MODULAIRE DESTINÉ À LA CULTURE DE VERDURE SUR DES PAROIS VERTICALES OU OBLIQUES

(30) Priorität: 25.08.2008 DE 102008039462; 17.08.2009 DE 102009037532
(43) Veröffentlichungstag der Anmeldung: 25.05.2011
(73) Patentinhaber: Helix Pflanzen GmbH, 70806 Kornwestheim (DE)
(72) Erfinder: MÜLLER, Hans, 70806 Kornwestheim (DE)
(74) Vertreter: Maser, Jochen
(86) Internationale Anmeldenummer: PCT/EP2009/006081
(87) Internationale Veröffentlichungsnummer: WO 2010/025837

(56) Entgegenhaltungen:
- EP-B- 0 337 085
- DE-U1-202004 000 438
- FR-A- 2 636 805
- FR-A- 2 857 396
- FR-A- 2 872 381
- FR-A- 2 872 382
- FR-A- 2 902 283

## Beschreibung

Die Erfindung betrifft ein Begrünungsmodul, ein Bestückungsmodul sowie ein Kassettenmodul für einen modularen Aufbau zur Begrünung von senkrechten oder schrägen Wänden. Solche Wand- und Fassadenbegrünungen als auch Begrünungen von Lärmschutzwänden oder Sichtschutzwänden dienen nicht nur der Verbesserung der Optik, sondern können auch zur Verbesserung des Klimas und zur Feinstaubreduzierung beitragen.

Aus der DE 20 2004 000 438 U1 ist eine Anordnung zur Begrünung einer aufrechten oder schrägen Wand bekannt geworden. Dabei ist vorgesehen, dass die Wand zunächst mit einer Schutzschicht abgedeckt wird, welche eine isolierende Funktion als auch die Funktion eines Wurzelschutzes aufweist. Anschließend wird auf dieser Schicht ein Füllkörper aufgebracht, der aufgrund seiner Unterteilungen dafür vorgesehen ist, unterschiedliches Pflanzensubstrat aufzunehmen. Dieser Füllkörper wird mit einer Trennschicht vollflächig abgedeckt. Anschließend wird auf diese Trennschicht eine Pflanzmatte mit vorkultivierten Pflanzen befestigt, so dass die Wurzeln der Pflanzen durch das Trennvlies hindurch in das Substrat des Füllkörpers hineinwachsen können.

Diese Anordnung weist den Nachteil auf, dass deren Befestigung und Montage vor Ort sehr zeitaufwändig ist, insbesondere durch die Befüllung des Füllkörpers mit Pflanzensubstrat. Darüber hinaus weist diese Anordnung den Nachteil auf, dass eine sichere Befestigung der Pflanzmatte nicht gewährleistet ist, um den erforderlichen Windlasten standzuhalten.

Aus der EP 0 337 085 B1 geht ein Aufbau für eine begrünte Lärmschutzwand hervor. Diese Lärmschutzwand weist ein Gerüst aus mehreren H-förmig ausgebildeten Trägern auf, um darin einzelne Trag- und Schutzgestelle aufzunehmen. Diese Trag- und Schutzgestelle bestehen aus einem steifen Gitter. In diesen mit einer festen Abmessung versehenen steifen Trag- und Schutzgestellen sind ein Nährmedium mit vorkultivierten Pflanzen sowie ein Bewässerungsmedium angeordnet. Zur Positionierung der einzelnen Trag- und Schutzgestelle sind jeweils zwei zueinander beabstandete H-förmig ausgebildete Träger vorgesehen, so dass diese Trag- und Schutzgestelle in dem H-förmigen Profil geführt und übereinander stapelbar sind.

Diese Anordnung weist den Nachteil auf, dass aufgrund der steifen gitterförmigen Ausgestaltung des Trag- und Schutzgestelles jeweils eine exakte und vollständige Füllung erforderlich ist. Darüber hinaus wird es beim Austausch einzelner Trag- und Schutzgestelle erforderlich, dass die darüber gestapelten und angeordneten Trag- und Schutzgestelle alle einzeln aus den Trägern herausgenommen werden müssen, bevor die Zugänglichkeit für ein zwischen den zwei H-profilförmigen Trägern angeordnetes Trag- und Schutzgestell ermöglicht ist.

Aus der FR 2 902 283 A1 geht eine Anordnung zur Herstellung einer begrünten Wand hervor, bei welcher an einer Wand vertikal ausgerichtete Leisten befestigt werden, um daran horizontal ausgerichtete Einhängeleisten zu befestigen. An diesen Einhängeleisten werden in einer Montagerichtung von unten nach oben Kassettenmodule eingehängt. Solche Kassettenmodule sind dreiteilig ausgebildet und bestehen aus einer Rückwand mit einem darin angebrachten Einhängeabschnitt, aus einem seitlich umlaufenden Rahmen, der auf die Rückwand aufsteckbar ist, und einem Gitter mit einem seitlichen Rahmen, welcher auf den an der Rückwand angreifenden Rahmen aufsetzbar ist. In dem Gitter des seitlichen umlaufenden Rahmens sind in regelmäßigen Abständen größere Öffnungen vorgesehen, damit Pflanzenmaterial herausragen kann. Auf die Rückwand mit dem umlaufenden Rahmen ist ein Substrat eingebracht und anschließend ein Vlies aufgebracht, welches hinter dem Gitter des Rahmens liegt, um ein Herausfallen des Substrats zu verhindern. Eine solche Kassette wird durch Einhängen an der horizontalen Leiste an der Wand zur Komplettierung der Begrünungsfassade befestigt.

Aus der FR 2 857 369 A1 geht des Weiteren eine begrünte Fassade hervor, bei der eine Einhängekassette vorgesehen ist, welche an horizontal verlaufenden Schienen oder Aufnahmeleisten einhängbar ist. In diese Einhängekassette wird von oben wiederum ein Kassettenelement eingeschoben, das in einzeine Rasterbereiche unterteilt ist. Hierbei handelt es sich um eine feste wabenförmige Platte, die im vorderen Bereich der Kassette von oben eingesteckt wird. Zwischen einer Vorderseite des Kassettenmoduls und dem wabenförmigen Einsatz wird ein Gitter positioniert. Anschließend wird der sich dahinter befindende Raum mit Erde oder Substrat verfüllt.

Der Erfindung liegt die Aufgabe zugrunde, ein Begrünungsmodul, ein Bestückungsmodul sowie ein Kassettenmodul für einen modularen Aufbau zur Begrünung von senkrechten oder schrägen Wänden zu schaffen, welche einfach ausgestaltet ist, kurze Montagezeiten vor Ort erfordert und einen flexiblen Austausch von Bestückungs- und Kassettenmodulen ermöglicht.

Diese Aufgabe wird erfindungsgemäß für ein Begrünungsmodul durch die Merkmale des Anspruchs 1 gelöst.

Die erfindungsgemäße Ausgestaltung von zumindest einem Kassettenmodul, welches zumindest ein Bestückungsmodul zur Bildung eines Begrünungsmoduls aufweist, beziehungsweise die Trennung des Begrünungsmoduls in ein Kassettenmodul und zumindest ein Bestückungsmodul weist den Vorteil auf, dass in einfacher Weise die Kassettenmodule an einer zu begrünenden Wand vormontiert werden können. Nachdem zumindest einzelne Kassettenmodule bereits an der Wand befestigt sind, können die Bestückmodule in einfacher Weise als eine Einheit von vorne in das jeweilige Kassettenmodul eingesetzt werden, wobei das Bestückungsmodul am Kassettenmodul durch zumindest ein lösbares Befestigungselement angeordnet ist. Anschließend ist die Montage des Begrünungsmoduls für die modulare Anordnung zur Begrünung der Wand beendet. Diese Anordnung ermöglicht des Weiteren, dass die Bestückmodule in einer Gärtnerei vollständig vorkonfektioniert werden können, so dass diese getrennt zu den Kassettenmodulen zum Montageort geliefert werden können. Dadurch ist eine lange Zwischenlagerung der Bestückungsmodule am Montageort bis zum Zeitpunkt für das Einbringen der Bestückungsmodule an den Kassettenmodulen nicht erforderlich. Das vorkultivierte Bestückungsmodul kann in der Gärtnerei bis vor der Montage betreut und bewässert werden, so dass die Bestückungsmodule in optimaler Pflanzenqualität vor Ort in die Kassettenmodule eingesetzt werden. Durch die Ausgestaltung des Bestückungsmoduls als eine Einheit, welche getrennt zum Kassettenmodul handhabbar ist, wird des Weiteren ermöglicht, dass bei einer Beschädigung eines Bestückungsmoduls oder beim Ausfall des Pflanzenwachstums bei einem Bestückungsmodul nur ein Austausch von diesem einen Bestückungsmodul erforderlich ist, da die Bestückungsmodule jeweils einzeln von außen auf das jeweilige Kassettenmodul aufsetzbar sind.

Nach einer bevorzugten Ausgestaltung des Begrünungsmoduls ist vorgesehen, dass das zumindest eine lösbare Befestigungselement an der Gitterstruktur des Bestückungsmoduls angreift. Dadurch kann gleichzeitig das gesamte Bestückungsmodul beziehungsweise die in der Umhüllungsschicht angeordneten weiteren Bestandteile, wie beispielsweise das Vegetationselement und die gegebenenfalls zumindest eine Funktionsschicht, in einer sicheren und definierten Lage zum Kassettenmodul angeordnet werden.

Nach einer weiteren vorteilhaften Ausgestaltung der Erfindung ist vorgesehen, dass mehrere Kassettenmodule in einer Reihe nebeneinander und in mehreren Reihen übereinander anordenbar sind und vorzugsweise zwischen den Seitenwänden der aneinandergrenzenden Kassettenmodule ein Dichtungsmaterial angeordnet ist. Dieses Dichtungsmaterial kann als Wurzelschutz oder als Wärmeschutz oder beides ausgebildet sein. Dadurch kann eine begrünte Wand geschaffen werden, welche durch die modulare Anordnung gegen die Witterung geschützt wird. Dies ermöglicht, dass durch den Einsatz solcher Begrünungsmodule einer solchen modularen Anordnung zumindest auf einzelne Schichten einer verputzten Wand verzichtet werden kann und die Pflanzenteile die Fassade nicht erreichen oder berühren und somit nicht beschädigen können.

Nach einer weiteren bevorzugten Ausgestaltung der Erfindung ist an einer oberen Stirnseite des Kassettenmoduls zumindest ein Bewässerungselement, insbesondere ein Tropfschlauch, vorgesehen, das Flüssigkeit in die zumindest eine Funktionsschicht im Bestückungsmodul, insbesondere wasserführende Schicht oder in das Vegetationselement, einbringt. Eine solche Anordnung ermöglicht ein integriertes Bewässerungssystem, so dass ein dauerhaftes Befeuchten des jeweiligen Begrünungsmoduls sichergestellt ist.

Die der Erfindung zugrunde liegende Aufgabe wird des Weiteren durch ein Bestückungsmodul gelöst, welches ein Vegetationselement mit zumindest einer Trägerschicht aufweist, in der Pflanzenmaterial eingebracht ist, wobei an einer Vorderseite des Vegetationselementes eine Gitterstruktur angeordnet ist, durch welche das Pflanzenmaterial zumindest teilweise herausragt und zumindest eine an der Gitterstruktur angreifende und das Vegetationselement aufnehmende und umgebende Umhüllungsschicht vorgesehen ist, welche das Bestückungsmodul als eine handhabbare Einheit zusammenhält. Die Umhüllungsschicht ist dabei aus einem nicht verrottbaren Maschengewebe ausgebildet. Die Gitterstruktur und die Umhüllungsschicht mit dem darin aufgenommenen Vegetationselement bilden dabei eine handhabbare Einheit. Dadurch wird ermöglicht, dass ein sogenanntes Päckchen vorgesehen ist, welches in einfacher Weise vor Ort in ein Kassettenmodul einsetzbar ist. Ebenso kann dieses in einfacher Weise auch ausgetauscht werden. Solche Päckchen werden in einer Gärtnerei hergestellt und aufgezogen, so dass vorkultivierte Bestückungsmodule unmittelbar vor Ort zur Komplettierung der zur Begrünung vorgesehenen Wände bereitgestellt und in die Kassettenmodule eingesetzt werden können. Durch die Umhüllungsschicht, welche aus einem nicht verrottbaren Material besteht, kann im Falle eines Austausches des Bestückungsmoduls selbst nach Jahren eine sichere Entnahme des Bestückungsmoduls ermöglicht sein. Ebenso können die durch die Umhüllungsschicht aufgenommenen Bestandteile, soweit diese bis zum Entnahmezeitpunkt nicht verrottet sind, sicher entnommen werden. Dies erleichtert die Handhabung und den Austausch des Kassettenmoduls zum Bestücken mit neuen Bestückungsmodulen.

Nach einer vorteilhaften Ausgestaltung des Bestückungsmoduls ist vorgesehen, dass die Gitterstruktur sich vollflächig entlang einer Oberfläche des Vegetationselements zum Format des Kassettenmoduls, in welchem das Kassettenmodul einsetzbar ist, erstreckt. Durch die insbesondere vollflächig zum Format des Kassettenmoduls sich erstreckende Gitterstruktur wird ermöglicht, dass eine vollständige Kapselung des Bestückungsmoduls nach dem Einsetzen des Bestückungsmoduls in das Kassettenmodul gegeben ist, das heißt, das die Gitterstruktur sämtliche weiteren dahinterliegenden Schichten und/oder Lagen innerhalb des Kassettenmoduls positioniert und fixiert. Bevorzugt ist diesbezüglich ein Metallgitter vorgesehen, so dass auch definierte geometrische Verhältnisse in der Tiefe des Begrünungsmoduls gegeben sind. Alternativ kann ein grobmaschiges reißfestes und nicht verrottbares Gewebe als auch ein biegesteifes Kunststoffgitter oder dergleichen vorgesehen sein, welches eine sichere Befestigung der Gitterstruktur zum Kassettenmodul sowie eine bezüglich der Gitterstruktur ausbeulungsarme Anordnung ermöglicht.

Bevorzugt ist vorgesehen, dass die Umhüllungsschicht aus einem Maschengewebe, aus Kunststoff, aus einem Maisstärkegitter, aus einem Vlies- oder Textilgewebe oder dergleichen oder aus Schnüren besteht. Diese Materialien, wie Kunststoff, Vlies- oder Textilgewebe, können aus recycelten Materialien hergestellt werden, so dass Abfallprodukte weiterverarbeitet und weiterverwendet werden können.

Des Weiteren ist bevorzugt vorgesehen, dass die Umhüllungsschicht als Wurzelsperrschicht ausgebildet ist oder zusätzlich eine Wurzelsperrschicht umfasst. Diese Anordnung weist den Vorteil auf, dass ein unkontrolliertes Wurzelwachstum aus dem Bestückungsmodul heraus verhindert werden kann.

Die Umhüllungsschicht greift bevorzugt vollumfänglich an der Gitterstruktur zur Bildung des Bestückungsmoduls an. Dadurch wird eine vollständige und sichere Aufnahme des Vegetationselementes ermöglicht, so dass diese Bestückungsmodule einer robusten Handhabung sowie den während der Produktion, Montage und Demontage auftretenden Kräften standhalten können. Bevorzugt ist dabei vorgesehen, dass die Umhüllungsschicht durch Schweißen, Heften, Klammern oder Vernähen an der Gitterstruktur oder nach einer Umschlingung der Gitterstruktur an sich selbst befestigt ist. Diese Befestigungsmöglichkeiten weisen den Vorteil auf, dass eine dauerhafte Befestigung ermöglicht ist. Ebenso kann ein einfaches Auftrennen der Umhüllungsschicht an einer Seitenfläche zum Austausch des Vegetationselementes erfolgen und anschließend wieder bestückt werden. Des Weiteren können einfache Clips- oder Rastbefestigungselemente an der Umhüllungsschicht vorgesehen sein, um entweder unmittelbar an der Gitterstruktur anzugreifen oder einen Teil der Gitterstruktur zu umschlingen, um selbst wiederum an der Umhüllungsstruktur anzugreifen.

Nach einer alternativen Ausgestaltung des Bestückungsmoduls ist vorgesehen, dass die Gitterstruktur ein Teil des Vegetationselementes ist oder in das Vegetationselement integriert ist. Dadurch wird der Vorteil erzielt, dass die Anzahl der zu handhabenden Komponenten bis zur Bildung einer Einheit als Bestückungsmodul reduziert wird. Dabei kann beispielsweise vorgesehen sein, dass die Gitterstruktur ein Teil des Vegetationselementes ist. Dies bedeutet, dass die Pflanzseite oder Vorderseite des Vegetationselementes durch die Gitterstruktur ausgebildet ist. Alternativ kann vorgesehen sein, dass das Vegetationselement eine Gitterstruktur aufnimmt, so dass dieses zur Sichtseite hin nicht unmittelbar in Erscheinung tritt, sondern zumindest teilweise vom Vegetationselement abgedeckt ist, bevor das Pflanzenmaterial auch das Vegetationselement vollständig abdeckt.

Nach einer weiteren alternativen Ausgestaltung des Bestückungsmoduls ist bevorzugt vorgesehen, dass die Gitterstruktur und die Umhüllungsschicht als Tasche aus einem gemeinsamen Material oder die Gitterstruktur und die Umhüllungsschicht jeweils aus einem getrennten Material ausgebildet ist, jedoch zu einer Tasche miteinander verbunden sind, in die das Vegetationselement mit zumindest einer Trägerschicht einsetzbar ist. Diese Anordnung weist den Vorteil auf, dass die Gitterstruktur und die Umhüllungsschicht beispielsweise als eine Einheit in die Gärtnerei geliefert werden können, in der das vorkultivierte Vegetationselement lediglich in die Tasche eingebracht wird. Dabei ist bevorzugt vorgesehen, dass eine Lasche entlang einer Seitenkante der Gitterstruktur ausgebildet ist, durch welche die Lasche verschließbar ist.

Des Weiteren ist bevorzugt vorgesehen, dass zumindest eine an einer Wurzelschicht des Vegetationselementes angeordnete Funktionsschicht vorgesehen und als wasserführende Schicht ausgebildet ist. Durch diese Ausgestaltung kann eine wasserführende Schicht, welche sich vorzugsweise über das gesamte Format des Kassettenmoduls erstreckt, in dem Begrünungsmodul integriert werden. Dadurch werden auch eine einfache Bewässerung der einzelnen Kassettenmodule sowie eine einfache Entwässerung ermöglicht. Die wasserführende Funktionsschicht kann gemäß einer bevorzugten Ausführungsform unmittelbar an das Vegetationselement angrenzen, so dass die sich in dem Vegetationselement ausgebildeten Wurzeln unmittelbar aus der wasserführenden Schicht die Flüssigkeit entnehmen können. Dabei ist vorgesehen, dass die wasserführende Schicht sowohl Wasser als auch Nährstoffe, wie beispielsweise Düngemittel oder sonstige Nährlösungen, führen kann. Die Ausgestaltung der wasserführenden Schicht aus Steinwolle ist bevorzugt im Hinblick auf die Brandschutzanordnungen vorgesehen.

Nach einer weiteren bevorzugten Ausgestaltung des Bestückungsmoduls ist in der Funktionsschicht als wasserführende Schicht zumindest eine horizontal sich erstreckende wasserspeichernde Schicht vorgesehen. Diese ermöglicht, dass unmittelbar nach einer Bewässerung die zugeführte Flüssigkeit nicht vollständig durch die wasserführende Schicht hindurchfließt, sondern zwischengespeichert wird, so dass für eine längere Zeitdauer das Pflanzenmaterial mit Feuchtigkeit versorgt werden kann. Bevorzugt kann die wasserspeichernde Schicht aus einem Material Oasis oder dergleichen ausgebildet werden, welches vorzugsweise eine porige oder geschäumte Schichtstruktur umfasst. Unter wasserspeichernde Schicht wird auch eine die Wasserführung verringernde Schicht verstanden, welche die Fließgeschwindigkeit reduziert.

Nach einer weiteren bevorzugten Ausgestaltung des Bestückungsmoduls ist zwischen der als wasserführenden Schicht ausgebildeten Funktionsschicht und dem Vegetationselement zumindest eine weitere Funktionsschicht vorgesehen. Diese weitere Funktionsschicht ist als Trennvlies ausgebildet. Dieses Trennvlies besteht bevorzugt aus durchwurzelbarem Material und ermöglicht, dass einerseits die Wurzeln in die wasserführende Schicht einwurzeln können, jedoch andererseits eine Art Schutzschicht ausgebildet ist, damit ein vorschnelles Austrocknen der Wasserschicht und Eindringen von Feinteilen, wie beispielsweise Kokosfasern, Substrat- oder Pflanzenteilen, aus der Pflanzmatte in die wasserführende Schicht verhindert wird.

Eine weitere bevorzugte Ausgestaltung des Bestückungsmoduls sieht vor, dass die Trägerschicht des Vegetationselementes aus wirr zueinander angeordneten einzelnen Fasern aus einem verrottbaren Material, insbesondere Kokosfasern, ausgebildet ist und dass vorzugsweise eine die Trägerschicht umgebende maschen- oder gitterförmige Hülle vorgesehen ist. Durch diese Ausgestaltung wird ermöglicht, dass die wirr zueinander angeordneten Einzelfasern in der Hülle gehalten werden können. Dadurch ist eine das Wurzelwachstum fördernde Basis gegeben. Sofern die Umhüllungsschicht und die Gitterstruktur als Tasche ausgebildet sind, kann die Hülle auch entfallen. Durch die maschen- oder gitterförmige Hülle wird das Pflanzenwachstum zur Pflanzseite beziehungsweise Sichtseite der modularen Anordnung nicht beeinträchtigt. Vorzugsweise ist die umgebende Hülle ebenso aus verrottbarem Material, insbesondere Kokosfaser, ausgebildet. Des Weiteren kann vorgesehen sein, dass zwischen der Hülle und dem Trägermaterial eine Gitterstruktur eingebracht ist.

Alternativ kann vorgesehen sein, dass die Trägerschicht des Vegetationselementes als Substratblock ausgebildet ist. Ein solcher Substratblock ist als Speicherschicht, beispielsweise aus Torfsubstrat, ausgebildet, welches mit biologisch abbaubarem Klebemittel als eigenständiger Körper zusammengehalten wird. Solche Substratblöcke dienen als Wasserspeicher und sind durchwurzelbar. Diese Substratblöcke können mit Zusatzstoffen und/oder Bindemitteln versehen sein, um das Wachstum der Pflanzen zu verbessern. Solche Substratblöcke werden durch eine luftige Pressung der Substratstruktur mit dem Torfmaterial gebildet. Solche Substratblöcke sind insbesondere aus verrottbarem Material hergestellt. Dadurch treten diese in ihrer Strukturgröße zurück und die Wurzeln können sich innerhalb des Vegetationselementes ausbilden. Solche Substratblöcke können bevorzugt kultursubstratfrei ausgebildet sein. Alternativ können auch Kultursubstrat oder weitere Aufdämmungsmittel oder Füllmaterialien, wie Hanf oder Sägespäne oder dergleichen eingebracht werden.

Des Weiteren kann alternativ vorgesehen sein, dass das Vegetationselement aus einer ein- oder mehrschichtigen Matte besteht beziehungsweise auch einen mehrschichtigen Aufbau aufweist. Beispielsweise kann eine unmittelbar an die Gitterstruktur angrenzende Schicht vorgesehen sein, welche verrottbar ist und aus Fasern besteht und als Matte ausgebildet ist. Alternativ kann hierzu eine nicht verrottbare Kunststofffasermatte vorgesehen sein. Diese Matte ist nicht zu dicht, so dass ein Eindringverhalten der Wurzeln beziehungsweise ein Durchdringen möglich ist. Diese Schicht kann alleine oder es kann zusätzlich eine weitere den Zwischenraum ausfüllende Schicht vorgesehen sein, welche ebenfalls zur Aufnahme von Wurzeln der Pflanze geeignet ist. Anschließend kann eine wasserführende Schicht vorgesehen sein. Dieser Schichtaufbau kann ebenfalls von der Umhüllungsschicht umgeben sein, so dass ein oder mehrere Schichten aus gleichen oder verschiedentlichen Materialien oder Materialeigenschaften durch die Umhüllungsschicht zur Gitterstruktur fixiert sind.

Eine weitere vorteilhafte Ausgestaltung des Vegetationselementes sieht vor, dass die Hülle und/oder die Trägerschicht kultursubstratfrei zur Aufnahme des Pflanzenmaterials ausgebildet sind. Dadurch wird eine lockere und luftige Struktur ermöglicht. Gleichzeitig wird vermieden, dass aufgrund der vorgesehenen Bewässerung Substratteilchen ausgeschwemmt werden und zu Verschmutzungen führen.

Des Weiteren ist bevorzugt zur Bestückung des Kassettenmoduls vorgesehen, dass das Bestückungsmodul ein Wurzelwachstum aufweist, bei dem die Wurzeln auf der Rückseite des Vegetationselementes zumindest teilweise herausragen oder die Wurzeln der Pflanzen in eine in oder an dem Vegetationselement angeordnete Funktionsschicht eingewachsen sind. Dadurch wird sichergestellt, dass die Vegetationselemente eine längere Transportdauer und Montagedauer sicher ohne Wasserversorgung überstehen. Gleichzeitig kann eine manuelle Bewässerung oder ein Niederschlag genügen, um eine Verzögerung bis zum bestimmungsgemäßen Einsatz ohne Beschädigung in der Pflanze zu überbrücken.

Das erfindungsgemäße Kassettenmodul, insbesondere zur Bildung eines Begrünungsmoduls, weist bevorzugt eine sich vollflächig erstreckende Grundfläche auf, die durch zumindest zwei Seitenwände durch jeweils einander gegenüberliegende und senkrecht zur Grundfläche stehende Seitenwände ausgebildet ist, wobei Befestigungselemente zur lösbaren Befestigung einer Gitterstruktur eines Bestückungsmoduls vorgesehen sind. Eine solche konstruktive Ausgestaltung des Kassettenmoduls ermöglicht einen einfachen Aufbau. Beispielsweise lassen sich die Kassettenmodule durch einen einfachen Stanzbiegevorgang in dieses Format überführen. Alternativ kann ein einfaches Strangprofil auf die jeweilige Formatgröße abgelängt und vorzugsweise Seitenwände aufgebogen werden. Durch die bevorzugt vollflächige Grundfläche beziehungsweise geschlossene Grundfläche mit sich daran anschließenden Seitenwänden kann das Kassettenmodul gleichzeitig als Wurzelsperrschicht dienen.

An einer Rückseite der Grundfläche des Kassettenmoduls ist bevorzugt ein Wandbefestigungselement vorgesehen. Dadurch können die einzelnen Kassettenmodule bündig aneinanderliegend angeordnet werden. Diese Wandbefestigung kann beispielsweise dadurch ausgebildet sein, dass in der Grundfläche Bohrungen eingebracht sind, durch welche eine herkömmliche Dübel-Wandbefestigung ermöglicht ist. Alternativ können vorgefertigte Anschlüsse vorgesehen werden, die auf bereits bestehende Wandverankerungen aufgebracht oder eingehängt werden können. Insbesondere bei der Ausgestaltung von hinterlüfteten Fassaden werden an der Rückseite der Grundfläche Wandbefestigungselemente ausgebildet, die ein sicheres Eingreifen an Montageschienen ermöglichen, die an der Wand fixiert sind.

Bevorzugt ist vorgesehen, dass die Seitenwände einen geschlossenen Rahmen bilden und mit der Grundfläche eine verwindungssteifen Aufbau aufweisen. Dadurch wird ermöglicht, dass jedes Kassettenmodul für sich genommen Mindestwindlasten aufnehmen kann. Durch die geschlossene Anordnung eines jeden Kassettenmoduls kann auch zu einem späteren Zeitpunkt ein einfacher Austausch eines Bestückungsmoduls ermöglicht werden. Darüber hinaus kann die Modularität einer grünen Wand oder Fassade erhöht werden.

Nach einer weiteren bevorzugten Ausgestaltung des Kassettenmoduls ist an einer Rückseite der Grundfläche des Kassettenmoduls eine Wärmedämmung und/oder Isolierschicht vorgesehen. Diese Ausgestaltung ermöglicht, dass die Fertigstellung von einer zu isolierenden und zu begrünenden Wand weiter vereinfacht wird. Durch die Montage der Kassettenmodule kann gleichzeitig die Wandisolierung geschaffen werden. Dabei kann vorgesehen sein, dass die Wärmedämmung und/oder Isolierschicht an deren Stirnseiten Falzkanten aufweisen, die teilweise ineinander greifen, so dass eine geschlossene Dämmschicht geschaffen wird.

Nach einer weiteren bevorzugten Ausgestaltung der Erfindung ist vorgesehen, dass die Gitterstruktur des Bestückungsmoduls durch an den Seitenwänden des Kassettenmoduls angeordnete lösbare Befestigungselemente, insbesondere Klammern, zum Kassettenmodul austauschbar positioniert ist. Bei dieser Ausgestaltung kann auf bestehende Normteile als Befestigungselemente zurückgegriffen werden. Beispielsweise kann durch die schwenkbare Anordnung einer Klammer ein schnelles Befestigen des Stabes der Gitterstruktur zur Seitenwand des Kassettenmoduls erfolgen. Eine solche Anordnung ist auch wiederum schnell lösbar. Alternativ kann anstelle einer Klammerbefestigung auch eine Schraubbefestigung, beispielsweise mittels einer kleinen Flanschplatte oder eine Flügelmutter, vorgesehen sein.

Eine alternative Ausgestaltung des Kassettenmoduls sieht vor, dass an den Seitenwänden Aufnahmeelemente vorgesehen sind, in welche eine Gitterstruktur eines Bestückungsmoduls zumindest teilweise eingreift, und dass vorzugsweise die Befestigungselemente die Gitterstruktur zu den Aufnahrnebereichen oder Aufnahmeelementen fixiert. Es können beispielsweise entlang einer Seitenkante der Gitterstruktur einzelne freie Stabenden des Gitters oder einzelne Befestigungsbolzen vorgesehen sein, die in Vertiefungen, Einbuchtungen oder Aufnahmeelementen an dem Kassettenmodul einsteckbar sind. Nach dem Einsetzen der Gitterstruktur in die Aufnahmeelemente kann an einer gegenüberliegenden Seite zumindest ein Befestigungselement vorgesehen sein, um die Gitterstruktur zum Kassettenmodul zu fixieren. Dieses Befestigungselement kann als schwenkbare Klammer oder als Riegel oder dergleichen ausgebildet sein. Insbesondere kann ermöglicht werden, dass die Klammer ein von außen zugängliches Aufnahmeelemente verschließt, so dass in Analogie zur gegenüberliegenden Seitenkante auch freie Enden oder Befestigungselemente der Gitterstruktur in die Aufnahmeelemente eingeschwenkt werden können und eingreifen. Dadurch wird eine einfache Fixierung und auch eine lagegesicherte Anordnung des Bestückungsmoduls zum Kassettenmodul ermöglicht. Bevorzugt ist dabei vorgesehen, dass diese Aufnahmeelemente gegenüber einer freien Stirnseite der Seitenwand nach innen versetzt angeordnet sind, so dass die Gitterstruktur jedenfalls innerhalb einer durch die freien Stirnseiten der Seitenwände gebildeten Ebene des Kassettenmoduls liegen. Dies ermöglicht, dass das Vegetationselement in gewissem Maße in dem Kassettenmodul eingebettet ist. Darüber hinaus kann dadurch eine Vereinfachung bei der Pflege, insbesondere beim Schneiden der Pflanzen, ermöglicht werden.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine Explosionsdarstellung eines Begrünungsmoduls für eine modulare Anordnung zur Begrünung von Wänden,
- Figur 2: eine schematische Seitenansicht des Begrünungsmoduls in Figur 1,
- Figur 3: eine perspektivische Darstellung eines bestückten Kassettenmoduls,
- Figur 4a: eine Explosionsdarstellung eines Begrünungsmoduls mit einer alternativen Befestigung,
- Figur 4b: eine Explosionsdarstellung eines Begründungsmoduls mit einer alternativen Befestigung,
- Figur 5: eine perspektivische Ansicht von mehreren zueinander angeordneten Begrünungsmodulen,
- Figur 6: eine schematische Seitenansicht des Begrünungsmoduls in Figur 5,
- Figur 7: eine perspektivische Ansicht einer alternativen Ausgestaltung eines Begrünungsmoduls,
- Figur 8: eine schematische Schnittdarstellung zweier übereinander angeordneten Begrünungsmodule gemäß Figur 7,
- Figur 9: eine schematische Schnittdarstellung einer alternativen Ausführungsform zu Figur 8.

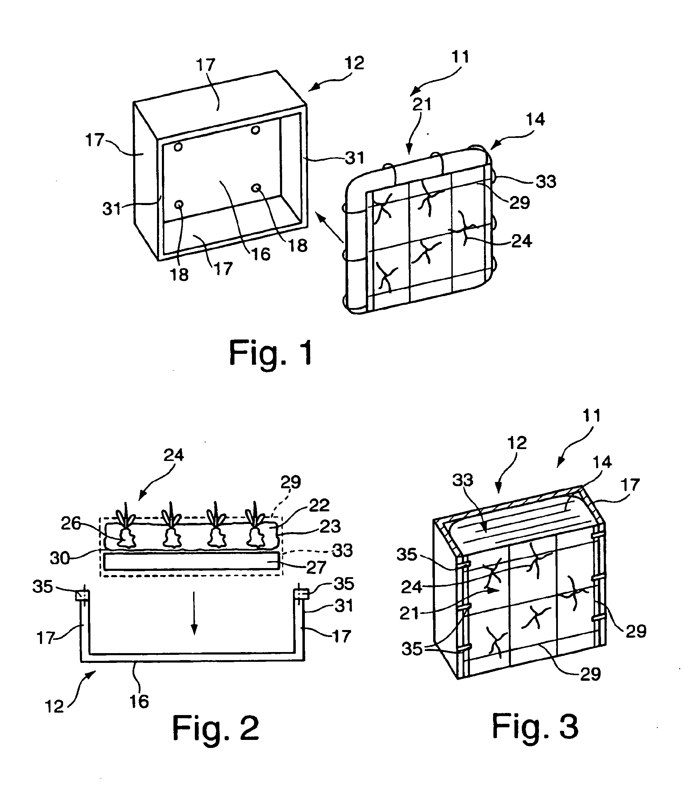

In Figur 1 ist perspektivisch eine Explosionsdarstellung eines erfindungsgemäßen Begrünungsmoduls 11 dargestellt, welches für eine modulare Anordnung zur Begrünung von senkrechten oder schrägen Wänden vorgesehen ist. Dieses Begrünungsmodul 11 umfasst ein Kassettenmodul 12, welches bevorzugt ein Bestückungsmodul 14 aufnimmt. Alternativ kann auch vorgesehen sein, dass mehrere Bestückungsmodule 14 in einem Kassettenmodul 12 angeordnet sind. Das Kassettenmodul 12 umfasst eine Grundfläche 16, die vorzugsweise eben und als vollständig geschlossene Fläche ausgebildet ist. An den jeweiligen Längsseiten der Grundfläche 16 sind zwei einander gegenüberliegende Seitenwände 17 vorgesehen. Alternativ können auch nur zwei einander gegenüberliegende Seitenwände 17, die bevorzugt senkrechtstehend zur Grundfläche 16 ausgebildet sind, vorgesehen sein. Diese können sowohl horizontal als auch vertikal ausgerichtet sein. Diese Anordnung stellt eine konstruktiv einfache Ausgestaltung eines Kassettenmoduls 12 dar.

Alternativ können zusätzlich wahlweise eine untere und/oder obere Seitenwand vorgesehen sein. Des Weiteren kann alternativ vorgesehen sein, dass zumindest zwei Seitenwände 17 aneinandergrenzen, so dass insbesondere ein geschlossener Eckbereich ausgebildet ist. Die Anordnung von vier Seitenwänden 17 zur Grundfläche 16, die miteinander fest verbunden sind, weist den Vorteil auf, dass durch die Seitenwände 17 ein geschlossener Rahmen gebildet wird, der mit der Grundfläche 16 ein Kassettenmodul mit einer hohen Verwindungssteifigkeit bildet. Das Kassettenmodul 12 kann aus einem Metallblech oder Blech aus Leichtmetall ausgebildet sein. Ebenso aus Kunststoff oder Kunststoffverbundmaterialien als auch aus Ton oder keramischen Materialien oder aus Beton oder Faserzementbeton. Das Kassettenmodul 12 kann in Abhängigkeit des verwendeten Materials zusätzlich mit einer Beschichtung als Wurzelsperrschicht versehen sein. Beispielsweise kann eine PUR-Schichtung aufgetragen werden. Zur Befestigung eines Kassettenmoduls 12 an einer Wand sind Halteeinrichtungen 18, wie beispielsweise Bohrungen, Profilierungen oder Vertiefungen, in die Grundfläche 16 eingebracht. Des Weiteren können auch separate Halteelemente lösbar oder unlösbar an der Grundfläche 16 befestigt sein.

Das Bestückungsmodul 14 ist als eine handhabbare Einheit ausgebildet, welches in das Kassettenmodul 12 einsetzbar ist. Dieses Bestückungsmodul 14 beinhaltet, wie beispielsweise in einer Schnittdarstellung in Figur 2 dargestellt ist, ein Vegetationselement 21, welches zumindest eine Trägerschicht 22 mit wirr zueinander angeordneten Einzelfasern umfasst. Diese Trägerschicht 22 ist vorzugsweise aus verrottbarem Material ausgebildet. Bevorzugt ist vorgesehen, dass die Trägerschicht 22 von einer maschen- oder gitterförmigen Hülle 23 umgeben ist. Auch diese Hülle 23 ist bevorzugt aus verrottbarem Material ausgebildet. Beispielsweise können Kokosfasern eingesetzt werden. Das Vegetationselement 21 kann alternativ zum vorgeschlagenen Aufbau auch aus Kunststofffasermatten bestehen und auch ohne Hülle 23 eingesetzt werden. Ebenso können mehrere Trägerschichten 22 vorgesehen sein.

Anstelle der Ausgestaltung eines Vegetationselementes 21 mit einer Trägerschicht 22 und einer Hülle 23 kann auch ein Substratblock vorgesehen sein. Hierbei handelt es sich um einen selbsthaltenden Block, der beispielsweise aus Torfmaterialien gebildet ist. Solche Substratblöcke weisen dieselben vorteilhaften Eigenschaften wie das Vegetationselement auf. Diese können als Wasserspeicher dienen und sowohl kultursubstratfrei als auch mit Kultursubstrat verwendet werden. Auch kann eine Kombination von einem Substratblock und einer oder mehreren Trägerschichten 22 mit oder ohne Hülle 23 vorgesehen sein

In dem Vegetationselement 21 ist Pflanzenmaterial 24 vorgesehen, welches als Jungpflanze oder Steckling eingebracht ist. Dieses Pflanzenmaterial 24 ist in diesem Vegetationselement 21 aufgezogen worden, so dass auf einer Seite Pflanzenmaterial 24 zumindest teilweise aus dem Vegetationselement 24 herausragt und gegenüberliegend sich bevorzugt zumindest teilweise aus dem Vegetationselement 21 herausragende Wurzelballen 26 ausgebildet haben, bevor ein solches Vegetationselement 21 zur Komplettierung des Bestückungsmoduls 14 eingesetzt wird. An einer dem Wurzelballen 26 zugewandten Seite des Vegetationselementes 21 ist beispielsweise eine Funktionsschicht 27 vorgesehen, welche als wasserführende und/oder wasserspeichernde Schicht ausgebildet ist. Diese Funktionsschicht 27 kann beispielsweise aus Steinwolle oder weiteren wasserführenden Materialien ausgebildet sein, die eine hohe Kapillarität verzeichnen. Des Weiteren kann vorgesehen sein, dass die Funktionsschicht 27 ein oder mehrere horizontal ausgerichtete Zwischenschichten umfasst, die als wasserspeichernde Schichten ausgebildet sind oder als eine Schicht, die eine geringere Wasserführungseigenschaft aufweist. Bevorzugt weist diese Funktionsschicht 27 auch ein gutes Einwurzelverhalten auf.

Auf der dem Pflanzmaterial 24 zugewandten Seite des Vegetationselementes 21 ist bevorzugt eine Gitterstruktur 29 aufgebracht. Diese Gitterstruktur 29 besteht bevorzugt aus einem grobmaschigen Metallgitter, welches eine ebene Anlagefläche für das Vegetationselement 21 bildet. Das Metallgitter kann aus Edelstahl oder verzinktem Drahtgewebe oder mit kunststoffummanteltem Drahtgewebe oder dergleichen ausgebildet sein. Alternativ können weitere Materialien für die Gitterstruktur 29 vorgesehen sein, welche ermöglichen, dass eine dauerhafte und feste Anordnung des Bestückungsmoduls 14 zum Kassettenmodul 12 ermöglicht ist. Die Gitterstruktur 29 erstreckt sich bis an den Randbereich der Grundfläche 16 beziehungsweise an die Stirnseiten 31 der Seitenwände 17, so dass in einem bestückten Zustand die Gitterstruktur 29 an den Stirnseiten 31 der Seitenwände 17 aufliegen beziehungsweise sich abstützen kann.

In einer ersten Ausführungsform kann vorgesehen sein, dass bei der Herstellung des Vegetationselementes 21 bereits die Gitterstruktur 29 integriert wird, das heißt, dass auf die Trägerschicht 22 die Gitterstruktur 29 aufgelegt wird und anschließend die maschen- oder gitterförmige Hülle 23 sowohl die Trägerschicht 22 als auch die Gitterstruktur 29 umgibt. Alternativ kann das Vegetationselement 21 auch mit der Gitterstruktur 29 versehen werden. In beiden Fällen werden anschließend die Jungpflanzen in das Vegetationselement 21 eingesetzt, um die Wurzelballen in dem Vegetationselement 21 auszubilden. In einer weiteren alternativen Ausführungsform kann auch vorgesehen sein, dass zunächst das Vegetationselement 21 und die darin eingesetzten Jungpflanzen aufgezogen werden und erst im Anschluss daran die Gitterstruktur 29 aufgelegt wird.

An der Gitterstruktur 29 greift eine Umhüllungsschicht 33 an, welche das Vegetationselement 21 und die vorzugsweise zumindest eine Funktionsschicht 27 umgibt und zumindest teilweise umschließt. Die Umhüllungsschicht 33 kann beispielsweise aus einer maschen- oder gitterförmigen Struktur ausgebildet werden. Dabei ist vorgesehen, dass die Umhüllungsschicht 33 das Vegetationselement 21 und vorzugsweise die zumindest eine Funktionsschicht 27 derart zur Gitterstruktur 29 positioniert und fixiert, dass eine einfache Handhabung und ein einfaches Einsetzen des Bestückungsmoduls 14 in das Kassettenmodul 12 gegeben ist. Bei dieser Handhabung wird das Bestückungsmodul 14 zumeist an der Gitterstruktur 29 ergriffen, um das Bestückungsmodul 14 in das Kassettenmodul 12 einzusetzen. Die Umhüllungsschicht 33 kann alternativ auch aus mehreren zueinander angeordneten Schnüren gebildet werden. Bevorzugt werden nicht verrottbare Materialien für die Umhüllungsschicht 33 eingesetzt. Beispielsweise können Kunststofffasermatten oder sogenannte Geotextilien oder Geokunststoffmatten eingesetzt werden. Durch die Anpassungsfähigkeit der Umhüllungsschicht 33 an die jeweilige Kontur beziehungsweise durch die nicht biegesteife Ausbildung kann das Bestückungsmodul 14 auch in einfacher Weise in das Kassettenmodul 12 eingesetzt werden. Des Weiteren ist bevorzugt vorgesehen, dass biologisch abbaubare Materialien zur Herstellung der Umhüllungsschicht 33 gebildet werden. Beispielsweise können Maisstärkegitter oder aber auch spezielle Kunststoffe eingesetzt werden. Die Umhüllungsschicht 33 kann beispielsweise durch eine Befestigungsklammer, einem -clip oder - haken mit der Gitterstruktur 29 verbunden werden. Dabei kann vorgesehen sein, dass die Befestigungsklammern, -clips oder -haken unmittelbar an der Gitterstruktur 29 angreifen oder um eine Befestigungslasche oder um ein äußeres Maschenelement der Gitterstruktur 29 herumgeschlungen werden, damit die Befestigungsklammern, -clips oder - haken an der Umhüllungsschicht 33 befestigt werden. Im letzteren Fall kann beispielsweise auch ein Verspannen der Umhüllungsschicht zur Gitterstruktur 29 erfolgen. Alternativ kann auch eine Schlaufenbildung der Umhüllungsschicht 33 im Randbereich der Gitterstruktur vorgesehen sein, die geklammert beziehungsweise getackert oder durch eine Verklebung oder Verschweißung der freien Schlaufenenden mit der weiteren Umhüllungsschicht befestigt wird.

Der Aufbau eines Bestückungsmoduls 14 kann beispielsweise wie folgt vorgesehen sein: Zunächst wird die Umhüllungsschicht 33 flächig auf den Boden aufgelegt. Anschließend wird darauf die zumindest eine Funktionsschicht 27 positioniert und das vorkultivierte Vegetationselement 21 aufgelegt. Die Gitterstruktur 29 wird auf die Pflanzseite des Vegetationselementes 21 aufgelegt. Alternativ kann vorgesehen sein, dass die Gitterstruktur 29 bereits beim oder vor dem Einbringen von Jungpflanzen oder Stecklingen in das Vegetationselement 21 auf dem Vegetationselement 21 positioniert wird.. Anschließend wird die Umhüllungsschicht 33 an der Gitterstruktur 29 befestigt, so dass das Bestückungsmodul 14 als eine handhabbare Einheit beziehungsweise als ein sogenanntes Päckchen ausgebildet ist. Diese handhabbare Einheit ist stapelbar und kann in einfacher Weise aus der Gärtnerei unmittelbar dem Montageort zugeführt werden.

Das Bestückungsmodul 14 kann des Weiteren zwischen der als wasserführenden Schicht ausgebildeten Funktionsschicht 27 und dem Vegetationselement 21 zumindest eine weitere Funktionsschicht 30 umfassen. Dies kann beispielsweise ein Trennvlies sein, welches die wasserführende Schicht vom Vegetationselement 21 trennt. Ein solches Trennvlies istbevorzugt durchwurzelbar.

Bevorzugt werden die Bestückungsmodule 14 erst dann in das Kassettenmodul eingesetzt, wenn die Pflanzendecke wenigstens 70 % an Flächenüberdeckung des Vegetationselementes 21 erreicht hat und/oder die Wurzeln der Pflanzen 24 in die Funktionsschicht 27 und/oder weitere Funktionsschichten 30 eingewachsen sind.

Die Befestigung des Bestückungsmoduls 14 zum Kassettenmodul 12 zur Bildung eines Begrünungsmoduls 11 ist beispielhaft in Figur 3 beschrieben. Nach dem Einsetzen des Bestückungsmoduls 14 in das Kassettenmodul 12 können Befestigungselemente 35 an der Gitterstruktur 29 angreifen und die Gitterstruktur 29 zu den Seitenwänden 17 beziehungsweise dem Kassettenmodul 12 festlegen. Beispielsweise können Klammern vorgesehen sein, die an den einzelnen Drähten oder Fasern der Gitterstruktur 29 angreifen. Alternativ können Schraubverbindungen oder Klemmverbindungen vorgesehen sein, welche ein schnelles Lösen oder Befestigen der Gitterstruktur 29 zum Kassettenmodul 12 vorzugsweise ohne Werkzeug ermöglichen. Durch die bevorzugte Auflage der Gitterstruktur 29 an den Stirnseiten 31 des Kassettenmoduls 12 kann ein definierter Bauraum und ein definiertes Baumaß für das Begrünungsmodul 11 hergestellt werden. Alternativ kann auch vorgesehen sein, dass die Gitterstruktur 29 sich innerhalb der Seitenwände 17 erstreckt und gegenüber den Stirnseiten 31 geringfügig innerhalb im Kassettenmodul 12 angeordnet ist. Des Weiteren kann alternativ vorgesehen sein, dass das Bestückungsmodul 14 mit Befestigungselementen 35, die an der Umhüllungsschicht 33 angreifen, zum Kassettenmodul 12 fixiert werden. Des Weiteren können Befestigungselemente 35 sowohl an der Gitterstruktur 29 als auch an der Umhüllungsschicht 33 angreifen, um das Bestückungsmodul 14 zum Kassettenmodul 12 zu fixieren.

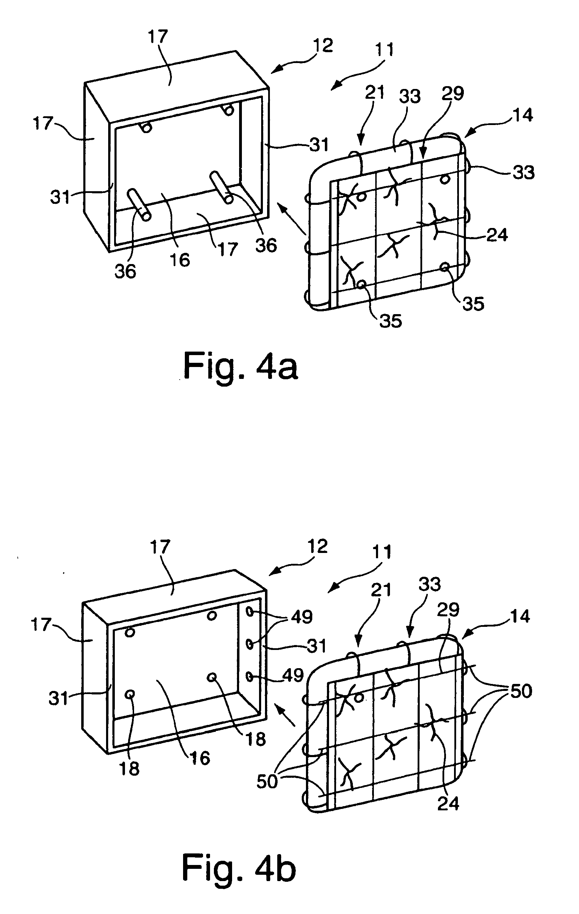

In Figur 4a ist eine alternative Ausführungsform zu Figur 3 dargestellt. Die Befestigungselemente 35 können ergänzend auch bei einer Befestigungsanordnung in Figur 4 vorgesehen sein. Gemäß Figur 4 sind Distanzelemente 36, insbesondere Distanzhülsen, vorgesehen, welche an der Grundfläche 16 angeordnet sind und sich senkrecht dazu erstrecken. Am stirnseitigen Ende der Distanzelemente 36 können wiederum herkömmliche Befestigungselemente 35 vorgesehen sein, die ein schnelles Befestigen und Lösen der Gitterstruktur 29 ermöglichen. Ergänzend können beispielsweise an der Gitterstruktur 29 ebenfalls einzelne Befestigungselemente 35, wie beispielsweise Montage- oder Klemmplatten mit Befestigungsschrauben oder -klammern oder dergleichen, vorgesehen sein. Bei dieser Ausführungsform kann die Gitterstruktur 29 freitragend zu den Seitenwänden 17 des Kassettenmoduls 12 angeordnet sein. Ebenso können sich Randbereiche der Gitterstrukturen 29 auf den Stirnseiten 31 des Kassettenmoduls 12 abstützen.

In Figur 4b ist eine weitere alternative Ausführungsform zu Figur 3 und 4a dargestellt. Dabei ist vorgesehen, dass die Befestigungselement 35 Aufnahmeelemente 49, insbesondere Vertiefungen oder Bohrungen aufweisen, in welche freie stiftförmige Enden 50 der Gitterstruktur 29 einsetzbar sind. Dadurch wird eine definierte Positionierung der Gitterstruktur zum Kassettenmodul 12 erzielt. Gegenüberliegend kann vorgesehen sein, dass an der Seitenwand 17 bis zur Stirnseite 31 ragende Vertiefungen vorgesehen sind, in welche ebenfalls die stiftförmigen Enden 50 eingreifen können. Zur Sicherung eines so angebrachten Bestückungsmoduls können Befestigungselemente 35 beziehungsweise Klammern vorgesehen werden, welche diese zur Stirnseite 31 ragenden Vertiefungen nach dem Einsetzen der Gitterstruktur 29 verschließen.

Diese Aufnahmeelemente 49 sind bevorzugt gegenüber der Stirnseite 31 mit Abstand nach innen versetzt angeordnet, so dass die Gitterstruktur 29 gegenüber der Vorderseite des Kassettenmoduls 12, welche durch die Stirnseite 31 gebildet ist, zurück versetzt ist.

Bei dieser Ausführungsform ist des Weiteren beispielhaft dargestellt, dass die untere Seitenwand 17, welche den Boden des Kassettenmoduls 12 bildet, zur Grundfläche 16 weisend nach unten geneigt ist. Dadurch kann eine selbstständige Wasserabführung zur Fassadenseite beziehungsweise zur Grundfläche 16 des Kassettenmoduls 12 erfolgen. Dies weist den Vorteil auf, dass sich im Kassettenmodul ansammelndes Wasser nicht zur Sichtseite hin austritt. An der Rückseite zur Grundfläche 16 können Anschlussöffnungen vorgesehen sein, um das Wasser abzuführen. Ebenso kann im oberen Bereich eine Zuführöffnung für die Bewässerung vorgesehen sein.

Eine weitere alternative Ausführungsform des Kassettenmoduls, welche nicht näher dargestellt ist, sieht vor, dass beispielsweise an einer Seitenwand 17 nahe der Stirnfläche 31 oder an der Stirnfläche 31 eine Gitterstruktur 29 schwenkbar befestigt ist. Dadurch kann beispielsweise ein Vegetationselement 21 mit Pflanzen 24 unmittelbar in das Kassettenmodul 12 eingesetzt werden. Anschließend wird die Gitterstruktur 29 in eine Schließposition übergeführt, so dass gegenüber der Gelenkverbindung über Befestigungselemente die Gitterstruktur 29 zur Seitenwand 17 gehalten wird, wodurch das Kassettenmodul 12 geschlossen ist. Somit wird zum Einsetzen des Vegetationselementes 21 die Gitterstruktur 29 nach Art eines Fenster geöffnet, um das Vegetationselement 21 einzusetzen, und anschließend wieder geschlossen. Die Gitterstruktur 29 kann dabei durch eine einfache Klammerbefestigung schwenkbar an der Seitenwand befestigt sein.

Alternativ kann des Weiteren vorgesehen sein, dass die Grundfläche 16 zur Bildung des Kassettenmoduls 12 zwei einander gegenüberliegende und vertikal ausgerichtete Seitenwände 17 aufweist. Sofern nun mehrere Kassettenmodule 12 übereinander angeordnet werden, kann in das oberste Kassettenmodul 12 eine vorbestimmte Menge an Wasser eingeleitet werden. Durch die nach unten offenen Kassettenmodule 12 kann die Feuchtigkeit selbstständig von oben nach unten gelangen, so dass eine vertikale Reihe von Vegetationselementen durch die Schwerkraft des Wassers selbstständig befeuchtet wird. Selbstverständlich kann zusätzlich beispielsweise nach fünf oder acht oder dergleichen übereinanderliegenden Kassettenmodulen 12 eine weitere Zuführung für die Bewässerung vorgesehen sein.

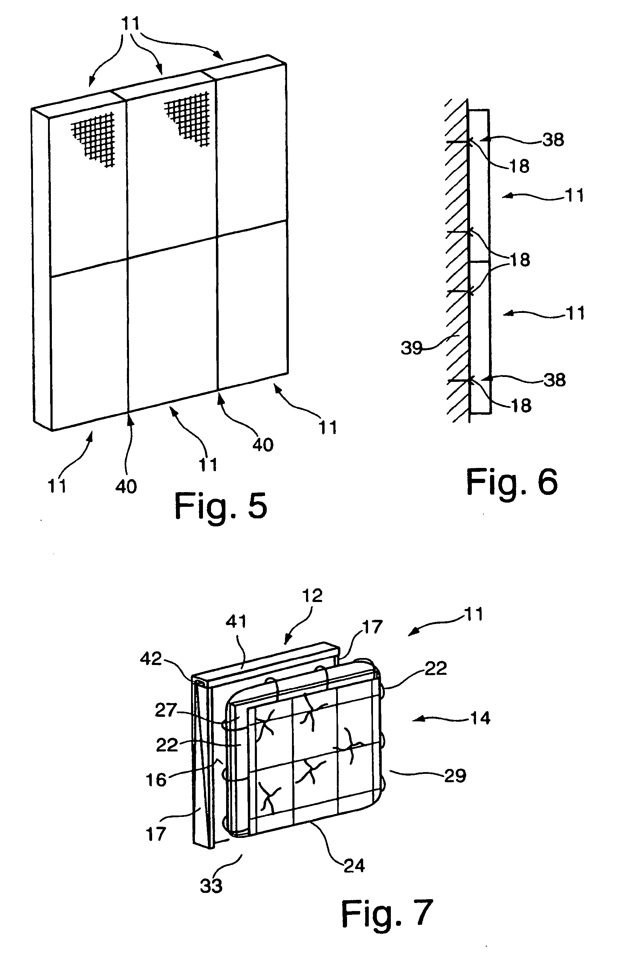

In Figur 5 ist eine perspektivische Ansicht von mehreren Begrünungsmodulen 11 zur Bildung einer begrünten Wand dargestellt. Figur 6 zeigt eine Seitenansicht zu Figur 5. Bei dieser Ausführungsform ist vorgesehen, dass die Begrünungsmodule 11 unmittelbar an einer Gehäusewand durch Verankerungselemente 38 befestigt werden. Dabei kann vorgesehen sein, dass die Rückseite der Grundfläche 16 des Kassettenmoduls 12 unmittelbar an der zu befestigenden Wand 39 anliegt. Alternativ kann zwischen der Wand 39 und der Grundfläche 16 des Kassettenmoduls 12 eine Wandisolierung und/oder eine Isolierschicht vorgesehen sein, um eine thermische Entkopplung, also eine Wärmedämmung, zu erzielen. Alternativ kann vorgesehen sein, dass die Kassettenmodule 12 mit Abstand zur Wand angeordnet sind, um eine hinterlüftete Fassade auszubilden. Zwischen den Seitenwänden 17 der Kassettenmodule 12 ist bevorzugt ein Dichtungsmaterial 40 vorgesehen, so dass aufgrund der Anordnung von mehreren Begrünungsmodulen 11 eine geschlossene modulare Anordnung ermöglicht ist, welche die dahinterliegende Wand 29 schützt. Das Dichtungsmaterial 40 kann als streifenförmige Dichtlippe oder Dichtstreifen ausgebildet sein, der zwischen den Kassettenmodulen vorgesehen ist oder die aneinandergrenzenden Stirnseiten abdichtet. Alternativ kann auch ein Dichtungsschaum vorgesehen sein.

Durch den modularen Aufbau des Begrünungsmoduls 11 aufgrund der Ausgestaltung des Kassettenmoduls 12 und dem Bestückungsmodul 14 ist ermöglicht, dass zunächst die Kassettenmodule 12 an der Wand 39 befestigt werden. Anschließend werden die Bestückungsmodule 14 bereitgestellt und können in die Kassettenmodule 12 eingesetzt und fixiert werden. Dadurch können die Bestückungsmodule 14 erst unmittelbar vor dem Zeitpunkt der Befestigung am Kassettenmodul 12 vor Ort bereitgestellt werden. Dies weist den Vorteil auf, dass bis zu diesem Zeitpunkt die Bestückungsmodule 14 in der Gärtnerei versorgt werden können.

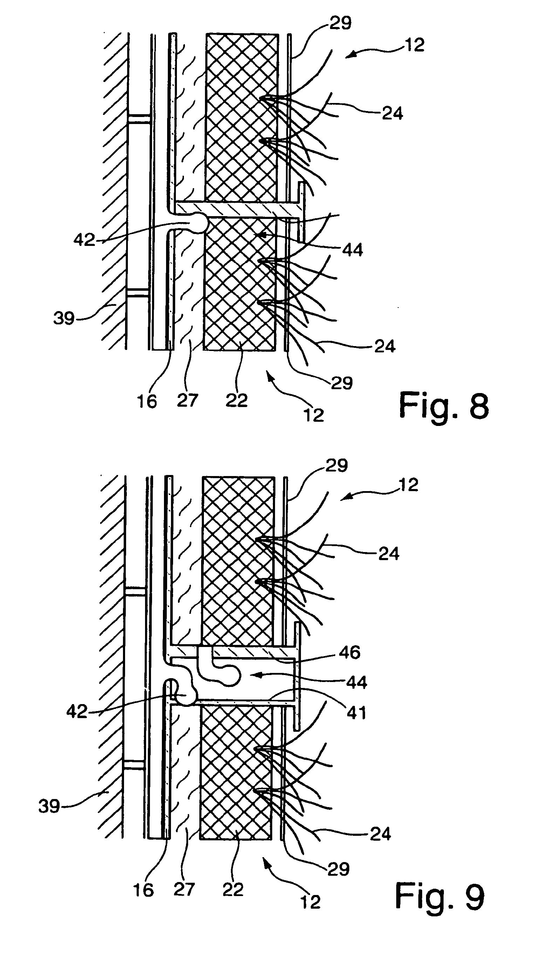

In Figur 7 ist eine perspektivische Ansicht eines alternativen Begrünungsmoduls 11 dargestellt. Bei dieser Ausführungsform weist das Kassettenmodul 12 beispielsweise eine obere Seitenwand 41 auf, so dass die Grundfläche 16 durch drei Seitenwände 17, 41 eingerahmt ist. Die Oberseite der oberen Seitenwand 41 kann beispielsweise schräg nach hinten verlaufend ausgebildet sein, so dass diese beim Aneinanderreihen der Module gleichzeitig den Boden des darüberliegenden Kassettenmoduls 12 bildet, um die Feuchtigkeit beziehungsweise Wasser nach hinten abzuführen. Zusätzlich kann auch noch eine Seitenwand 17 als Boden vorgesehen sein. Der oberen Seitenwand 41 zugeordnet ist ein Bewässerungsschlauch 42 integriert. Dieser Bewässerungsschlauch 42 bildet einen Teil eines Bewässerungssystems der Begrünungsmodule 11. Bevorzugt ist an den jeweiligen an den Seitenwänden 17 angrenzenden Bereichen der Bewässerungsschläuche 42 eine Kupplung vorgesehen, um die einzelnen Wasserschläuche 42 miteinander zu verbinden. Der Bewässerungsschlauch 42 ist dabei derart angeordnet, dass dieser vorzugsweise unmittelbar in die Funktionsschicht 27, welche als wasserführende Schicht ausgebildet ist, die Flüssigkeit einleitet. Darüber können auch eine Nährlösung, Düngemittel, Pflanzenschutzmittel oder dergleichen zugeführt werden. Dies ist beispielhaft in Figur 8 dargestellt.

Sofern zusätzlich eine Entwässerung bei einem Begrünungsmodul 11 vorgesehen sein soll, ist bevorzugt ein Wasserrücklauf 44 vorgesehen, der in einer unteren Seitenwand 46 des Kassettenmoduls 12 integriert oder unterhalb der Seitenwand 46 angeordnet ist. Die zwei aneinander grenzenden Kassettenmodule 12 sind dabei derart aufeinander abgestimmt, dass in einem Zwischenraum zwischen der oberen und unteren Seitenwand 41, 46 sowohl die Bewässerungsschläuche 42 zugeführt als auch der Wasserrücklauf 44 abgeführt werden können. Dabei sind am Bewässerungsschlauch 42 und Wasserrücklauf 44 vorzugsweise Schnellverbindungsanschlüsse vorgesehen, um eine schnelle Montage der Kassettenmodule 12 mit einer Versorgungsleitung an einer Wand 39 zu ermöglichen.

## Patentansprüche

1. Begrünungsmodul für eine modulare Anordnung zur Begrünung von senkrechten oder schrägen Wänden, wobei
- zumindest ein an einer Wand (39) befestigbares Kassettenmodul (12) vorgesehen ist, **dadurch gekennzeichnet,**
- **dass** zumindest ein Bestückungsmodul (14) vorgesehen ist, welches
- ein Vegetationselement (21) mit zumindest einer Trägerschicht (22) aufweist, in der Pflanzenmaterial (24) eingebracht ist,
- eine an der Vorderseite des Vegetationselementes (21) angeordnete Gitterstruktur (29) aufweist, durch welche das Pflanzenmaterial (24) zumindest teilweise herausragt und
- zumindest eine an der Gitterstruktur (29) angreifenden und das Vegetationselement (21) aufnehmende und umgebende Umhüllungsschicht (33), die aus einem nicht verrottbaren Maschengewebe besteht, aufweist, welche das Bestückungsmodul (14) als eine handhabbare Einheit zusammenhält, und
- als eine Einheit von vorne in das Kassettenmodul (12) einsetzbar ist und
- das Kassettenmodul (12) und das Bestückungsmodul (14) durch zumindest ein lösbares Befestigungselement (35) zueinander angeordnet sind.

2. Begrünungsmodul nach Anspruch 1, **dadurch gekennzeichnet, dass** das zumindest eine Befestigungselement (35) an der Gitterstruktur (29) des Bestückungsmoduls (14) angreift.

3. Begrünungsmodul nach Anspruch 1, **dadurch gekennzeichnet, dass** mehrere Kassettenmodule (12) in einer Reihe nebeneinander und in mehreren Reihen übereinander anordenbar sind und zwischen den Seitenwänden (17) ein Dichtungsmaterial (40) vorgesehen ist.

4. Begrünungsmodul nach Anspruch 1, **dadurch gekennzeichnet, dass** an einer oberen Stirnseite des Kassettenmoduls (21) zumindest ein Bewässerungselement (42), insbesondere ein Tropfschlauch, vorgesehen ist, das Flüssigkeiten in zumindest eine Funktionsschicht (27) im Bestückungsmodul (14), die insbesondere als wasserführende Schicht ausgebildet ist, oder in das Vegetationselement (21) einbringt.

5. Bestückungsmodul für ein Begrünungsmodul nach Anspruch 1, **dadurch gekennzeichnet, dass** zumindest ein Vegetationselement (21) mit zumindest einer Trägerschicht (22) vorgesehen ist, in der Pflanzenmaterial (24) eingebracht ist, mit einer an der Vorderseite des Vegetationselementes (21) angeordneten Gitterstruktur (29), durch welche das Pflanzenmaterial (24) zumindest teilweise herausragt, und mit zumindest einer an der Gitterstruktur (29) angreifenden und das Vegetationselement (21) aufnehmenden und umgebenden Umhüllungsschicht (33), die aus einem nicht verrottbaren Maschengewebe besteht und dass die Gitterstruktur (29) und die Umhüllungsschicht (33) mit dem darin aufgenommenen Vegetationselement (21) eine handhabbare Einheit bildet.

6. Bestückungsmodul nach Anspruch 5, **dadurch gekennzeichnet, dass** die Gitterstruktur (29) sich vollflächig entlang einer Oberfläche des Vegetationselementes (21) zum Format eines Kassettenmoduls (12) erstreckt und vorzugsweise aus einem Metallgitter, einem grobmaschigen reißfesten und nicht verrottbaren Gewebe oder einem biegesteifem Kunststoffgitter ausgebildet ist.

7. Bestückungsmodul nach Anspruch 5, **dadurch gekennzeichnet, dass** die Umhüllungsschicht (33) aus einem Maschengewebe aus Kunststoff, aus einem Maisstärkegitter, aus einem Vlies- oder Textilgewebe oder aus Schnüren besteht und vorzugsweise als Wurzelsperrschicht ausgebildet ist oder eine zusätzliche Wurzelschicht aufweist.

8. Bestückungsmodul nach Anspruch 5, **dadurch gekennzeichnet, dass** die Umhüllungsschicht (33) abschnittsweise oder vollumfänglich an der Gitterstruktur (29) angreift und das Vegetationselement (21) umschließt und vorzugsweise durch Schweißen, Heften, Klammern oder Vernähen der Umhüllungsschicht (33) an der Gitterstruktur (29) befestigt ist.

9. Bestückungsmodul nach Anspruch 5, **dadurch gekennzeichnet, dass** die Gitterstruktur (29) des Bestückungsmoduls (14) ein Teil des Vegetationselementes (21) ist oder in das Vegetationselement (21) integriert ist.

10. Bestückungsmodul nach Anspruch 5, **dadurch gekennzeichnet, dass** die Gitterstruktur (29) und die Umhüllungsschicht (33) als Tasche aus einem Material oder wenigstens zwei unterschiedlichen Materialien ausgebildet sind, in die das Vegetationselement (21) mit zumindest einer Trägerschicht (22) einsetzbar und vorzugsweise zumindest eine Seitenkante der Tasche verschließbar ist.

11. Bestückungsmodul nach Anspruch 5, **dadurch gekennzeichnet, dass** zumindest eine an einer Wurzelseite des Vegetationselementes (21) angeordnete Funktionsschicht (27) vorgesehen ist, die vorzugsweise als wasserführende Schicht ausgebildet ist und insbesondere in der Funktionsschicht (27) als wasserführende Schicht zumindest eine horizontal sich erstreckende wasserspeichernde oder die Wasserführung verringernde Schicht vorgesehen ist und insbesondere zwischen der vorzugsweise als wasserführenden Schicht ausgebildeten Funktionsschicht (27) und dem Vegetationselement (21) eine weitere Funktionsschicht (30) vorgesehen ist, die vorzugsweise als Trennvlies ausgebildet ist.

12. Bestückungsmodul nach Anspruch 5, **dadurch gekennzeichnet, dass** die Trägerschicht (22) des Vegetationselementes (21) aus wirr zueinander angeordneten Einzelfasern, insbesondere aus verrottbarem Material, ausgebildet ist und vorzugsweise eine die Trägerschicht (22) umgebende maschen- oder gitterförmige Hülle (23) umfasst oder dass die Trägerschicht (22) als Substratblock ausgebildet ist und vorzugsweise die Hülle (23) und/oder die Trägerschicht (22) des Vegetationselementes (21) kultursubstratfrei zur Aufnahme des Pflanzenmaterial (24) vorgesehen sind.

13. Kassettenmodul für ein Begrünungsmodul nach Anspruch 1 mit einer sich vollflächig erstreckenden Grundfläche (16), die durch zumindest zwei Seitenwände (17) durch jeweils einander gegenüberliegende und senkrecht zur Grundfläche (16) stehende Seitenwände (17) begrenzt ist, **dadurch gekennzeichnet, dass** Befestigungselemente (35) zur lösbaren Befestigung einer Gitterstruktur (29) eines Bestückungsmoduls (14) vorgesehen sind, welche nach dem Einsetzen des Bestückungsmoduls (14) von vorne in das Kassettenmodul (12) an der Gitterstruktur (29) angreifen.

14. Kassettenmodul nach Anspruch 13, **dadurch gekennzeichnet, dass** eine Gitterstruktur (29) eines Bestückungsmoduls (14) durch an den Seitenwänden (17) angeordnete lösbare Befestigungselemente (35), insbesondere Klammern, am Kassettenmodul (12) austauschbar positioniert ist.

15. Kassettenmodul nach Anspruch 13, **dadurch gekennzeichnet, dass** an den Seitenwänden (17) Aufnahmeelemente (49) vorgesehen sind, in welche stabförmige Enden (50) der Gitterstruktur (29) des Bestückungsmoduls (14) zumindest teilweise eingreifen und dass durch die lösbaren Befestigungselemente (35) die stabförmigen Enden (50) der Gitterstruktur (29) zu den Aufnahmeelementen (49) fixiert sind.

## Claims

1. A greening module for a modular arrangement for the greening of vertical or slanted walls, wherein
- at least one cassette module (12) is provided that can be fixed on a wall (39), **characterised**
- **in that** at least one equipment module (14) is provided, which
- has a vegetation element (21) having at least one support layer (22) into which plant material (24) is inserted,
- has a grid structure (29) disposed at the front of the vegetation element (21) and through which the plant material (24) at least partially protrudes, and
- has at least one enveloping layer (33) applied to the grid structure (29) and receiving and surrounding the vegetation element (21) and which consists of a non-decomposable mesh fabric and holds the equipment module (14) together as a manageable unit, and
- is insertable, as a unit, into the cassette module (12) from the front, and
- **in that** the cassette module (12) and the equipment module (14) are disposed with respect to each other by at least one releasable fastener (35).

2. The greening module as claimed in claim 1, **characterised in that** the at least one fastener (35) is applied to the grid structure (29) of the equipment module (14).

3. The greening module as claimed in claim 1, **characterised in that** a plurality of cassette modules (12) may be arranged side by side in a row and may be disposed above one another in a plurality of rows, and **in that** a sealing material (40) is provided between the side walls (17).

4. The greening module as claimed in claim 1, **characterised in that** on an upper end face of the cassette module (21) at least one irrigation element (42), in particular a drip tubing, is arranged by which liquids are inserted into at least one function layer (27) provided in the equipment module (14) and realised in particular as a water-bearing layer, or into the vegetation element (21).

5. An equipment module for a greening module as claimed in claim 1, **characterised in that** at least one vegetation element (21) with at least one support layer (22) into which plant material (24) is inserted is provided, said equipment module having a grid structure (29) arranged at the front of the vegetation element (21) through which the plant material (24) at least partially protrudes, and having at least one enveloping layer (33) that consists of a non-decomposable mesh fabric and is applied to the grid structure (29) and receives and surrounds the vegetation element (21), and **in that** the grid structure (29) and the enveloping layer (33), together with the vegetation element (21) received therein, form a manageable unit.

6. The equipment module as claimed in claim 5, **characterised in that** the grid structure (29) extends along a surface of the vegetation element (21) all over with respect to the format of a cassette module (12) and is preferably formed from a metal grid, a coarse-mesh, non-tear, and non-decomposable fabric, or from a deflection-resistant plastic grid.

7. The equipment module as claimed in claim 5, **characterised in that** the enveloping layer (33) consists of a mesh fabric made from plastic, a maize starch grid, a fleece fabric or textile fabric or of cords and is preferably realised as a root barrier layer or has an additional root layer.

8. The equipment module as claimed in claim 5, **characterised in that** the enveloping layer (33) is applied sectionwise or all-over to the grid structure (29) so as to surround the vegetation element (21) and is preferably fixed to the grid structure (29) by means of welding, tack-welding, stapling or sewing the enveloping layer (33) to the grid structure (29).

9. The equipment module as claimed in claim 5, **characterised in that** the grid structure (29) of the equipment module (14) is part of the vegetation element (21) or is incorporated into the vegetation element (21).

10. The equipment module as claimed in claim 5, **characterised in that** the grid structure (29) and the enveloping layer (33) are realised as a pocket made from one material or from at least two different materials and into which the vegetation element (21) may be inserted together with at least one support layer (22) and **in that** at least one lateral edge of the pocket may be closed.

11. The equipment module as claimed in claim 5, **characterised in that** at least one function layer (27) disposed on a root side of the vegetation element (21) is provided which is preferably realised as a water-bearing layer, and **in that** in particular within the function layer (27) at least one layer extending horizontally and storing water or reducing the rate of flow is provided as a water-bearing layer, and **in that** in particular between the function layer (27), preferably realised as a water-bearing layer, and the vegetation element (27) another function layer (30) is provided which is preferably realised as a separation fleece.

12. The equipment module as claimed in claim 5, **characterised in that** the support layer (22) of the vegetation element (21) is formed of individual fibres made from a decomposable material that are randomly disposed with respect to each other, and preferably comprises a mesh-like or grid-shaped envelope (23) surrounding the support layer (22) or **in that** said support layer (22) is realised in the form of a substrate block, and **in that** preferably the envelope (23) and/or the support layer (22) of the vegetation element (21) are designed for receiving the plant material (24) without the addition of a growing medium substrate.

13. A cassette module for a greening module as claimed in claim 1, having a base area (16) which extends over the entire surface and is limited by at least two side walls (17), said sidewalls (17) being disposed opposite each other and vertically with respect to the base area (16), **characterised in that** fasteners (35) for releasably fastening a grid stucture (29) of an equipment module (14) are provided, said fasteners being applied to the grid structure (29) once the equipment module (14) has been inserted into the cassette module (12) from the front.

14. The cassette module as claimed in claim 13, **characterised in that** a grid structure (29) of an equipment module (14) is replaceably positioned on the cassette module (12) by means of releasable fasteners (35), in particular staples, which are disposed on the side walls (17).

15. The cassette module as claimed in claim 13, **characterised in that** on the sidewalls (17), holding elements (49) are provided with which rod-shaped ends (50) of the grid structure (29) of the equipment module (14) at least partially engage, and **in that** the rod-shaped ends (50) of the grid structure (29) are fixed with respect to the holding elements (49) by means of the releasable fasteners (35).

## Revendications

1. Module de végétalisation pour une disposition modulaire destiné à végétaliser des parois verticales ou inclinées, dans lequel
- il est prévu au moins un module cassette (12) pouvant être fixé à une paroi (39), **caractérisé en ce que**
- il est prévu au moins un module de garnissage (14)
- qui présente un élément de végétation (21) avec au moins une couche support (22) dans laquelle se trouve inséré du matériau végétal (24),
- qui présente une structure treillissée (29) qui est disposée sur la face avant de l'élément de végétation (21) et à travers laquelle dépasse au moins partiellement le matériau végétal (24) et
- qui présente au moins une couche enveloppante (33) appuyant contre la structure treillissée (29) et accueillant et entourant l'élément de végétation (21), laquelle couche est constituée par un tissu maillé imputrescible et tient ensemble le module de garnissage (14) en tant qu'unité maniable et
- qui, en tant qu'unité, est insérable par devant dans le module cassette (12), et
- le module cassette (12) et le module de garnissage (14) sont disposés l'un par rapport à l'autre à l'aide d'au moins un élément de fixation amovible (35).

2. Module de végétalisation selon la revendication 1, **caractérisé en ce que** ledit au moins un élément de fixation (35) appuie contre la structure treillissée (29) du module de garnissage (14).

3. Module de végétalisation selon la revendication 1, **caractérisé en ce que** plusieurs modules cassette (12) peuvent être disposés, dans une rangée, les uns à côté des autres et, dans plusieurs rangées, les uns au-dessus des autres, et **en ce qu'**un matériau d'étanchéité (40) est prévu entre les parois latérales (17).

4. Module de végétalisation selon la revendication 1, **caractérisé en ce que** sur une face frontale supérieure du module cassette (21) est prévu au moins un élément d'irrigation (42), notamment un tuyau goutte à goutte, qui apporte des liquides dans au moins une couche fonctionnelle (27) située dans le module de garnissage (14) et réalisée notamment sous forme de couche aquifère, ou dans l'élément de végétation (21).

5. Module de garnissage pour un module de végétalisation selon la revendication 1, **caractérisé en ce qu'**il est prévu au moins un élément de végétation (21) avec au moins une couche support (22) dans laquelle se trouve inséré du matériau végétal (24), ledit module de garnissage comportant une structure treillissée (29) disposée sur la face avant de l'élément de végétation (21) et à travers laquelle dépasse au moins partiellement le matériau végétal (24), et comportant au moins une couche enveloppante (33) appuyant contre la structure treillissée (29) et accueillant et entourant l'élément de végétation (21), laquelle couche est constituée par un tissu maillé imputrescible, et **en ce que** la structure treillissée (29) ainsi que la couche enveloppante (33) avec l'élément de végétation (21) qu'elle contient forment une unité maniable.

6. Module de garnissage selon la revendication 5, **caractérisé en ce que** la structure treillissée (29) s'étend, sur toute la surface, le long d'une surface de l'élément de végétation (21) par rapport au format d'un module cassette (12) et est de préférence réalisée en un treillis métallique, un tissu à grosses mailles résistant à la déchirure et imputrescible ou en un treillis en matière plastique résistant à la flexion.

7. Module de garnissage selon la revendication 5, **caractérisé en ce que** la couche enveloppante (33) est constituée par un tissu à mailles en matière plastique, par un treillis en amidon de maïs, par un tissu textile ou un non-tissé ou par des ficelles et est formée de préférence en tant que couche de barrage contre les racines ou présente une couche de racines supplémentaire.

8. Module de garnissage selon la revendication 5, **caractérisé en ce que** la couche enveloppante (33) appuie par sections ou sur toute la circonférence contre la structure treillissée (29) et entoure l'élément de végétation (21), et **en ce que** la couche enveloppante (33) est fixée à la structure treillissée (29) de préférence par soudage, pointage, agrafage ou par couture.

9. Module de garnissage selon la revendication 5, **caractérisé en ce que** la structure treillissée (29) du module de garnissage (14) constitue une partie de l'élément de végétation (21) ou est intégrée dans l'élément de végétation (21).

10. Module de garnissage selon la revendication 5, **caractérisé en ce que** la structure treillissée (29) et la couche enveloppante (33) sont formées en tant que poche réalisée en un seul matériau ou en au moins deux matériaux différents dans laquelle peut être inséré l'élément de végétation (21) avec au moins une couche support (22), et **en ce que** de préférence au moins un bord latéral de la poche peut être fermé.

11. Module de garnissage selon la revendication 5, **caractérisé en ce qu'**il est prévu au moins une couche fonctionnelle (27) disposée d'un côté racines de l'élément de végétation (21), laquelle est formée de préférence en tant que couche aquifère, et **en ce que** notamment dans la couche fonctionnelle (27) est prévue, en tant que couche aquifère, au moins une couche s'étendant horizontalement, stockant l'eau ou réduisant l'apport d'eau, et **en ce que** notamment entre la couche fonctionnelle (27) formée de préférence en tant que couche aquifère et l'élément de végétation (21) est prévue une autre couche fonctionnelle (30) qui est formée de préférence en tant que voile de séparation.

12. Module de garnissage selon la revendication 5, **caractérisé en ce que** la couche support (22) de l'élément de végétation (21) est formée par des fibres unitaires disposées de manière aléatoire les unes par rapport aux autres, notamment par un matériau putrescible, et comprend de préférence une enveloppe (23) en forme de mailles ou de treillis' entourant la couche support (22), ou **en ce que** la couche support (22) est formée en tant que bloc de substrat, et **en ce que** de préférence l'enveloppe (23) et/ou la couche support (22) de l'élément de végétation (21) sont prévues sans substrat de culture pour accueillir le matériau végétal (24).

13. Module cassette pour un module de végétalisation selon la revendication 1 avec une surface de base (16) qui s'étend sur toute la surface et qui est limitée par au moins deux parois latérales (17), lesdites parois latérales (17) étant situées respectivement à l'opposée l'une de l'autre et perpendiculairement à la surface de base (16), **caractérisé en ce qu'**il est prévu des éléments de fixation (35) destinés à fixer de manière amovible une structure treillissée (29) d'un module de garnissage (14) lesquels appuient, après que le module de garnissage (14) ait été inséré par devant dans la module cassette (12), contre la structure treillissée (29).

14. Module cassette selon la revendication 13, **caractérisé en ce qu'**une structure treillissée (29) d'un module de garnissage (14) est positionnée de manière interchangeable sur le module cassette (12) à l'aide d'éléments de fixation (35) amovibles, notamment des agrafes, disposés sur les parois latérales (17).

15. Module cassette selon la revendication 13, **caractérisé en ce que** sur les parois latérales (17) sont prévus des éléments de réception (49) dans lesquels engrènent au moins partiellement des extrémités (50) en forme de tige de la structure treillissée (29) du module de garnissage (14), et **en ce que** les extrémités (50) en forme de tige de la structure treillissée (29) sont fixées par rapport aux éléments de réception (49) par les éléments de fixation amovibles (35).
